# EUROPÄISCHE PATENTANMELDUNG

(11) **EP 4 454 785 A1**
(43) Veröffentlichungstag der Anmeldung: **30.10.2024**
(21) Anmeldenummer: 23170238.2
(22) Anmeldetag: 27.04.2023
(51) Int. Cl.: B22F 1/10, B22F 10/18, B28B 1/00, B28B 3/20, B29C 64/118, B33Y 10/00, B33Y 70/10, C04B 35/636, C08L 1/02, D01F 2/00, D01F 8/02

(54) **MATERIAL ZUR ADDITIVEN EXTRUSIONSBASIERTEN BAUTEILHERSTELLUNG**

(71) Anmelder: CERATIZIT Austria Gesellschaft m.b.H., 6600 Reutte (AT)
(72) Erfinder: WALCH, Manuel, 6600 Reutte (AT); LECHLEITNER, Peter, 6600 Reutte (AT); FITTSCHEN, Kevin, 6600 Reutte (AT); HÖFLER, Stefan, 6600 Reutte (AT)
(74) Vertreter: Ciesla, Dirk

(57) **Zusammenfassung**

Material zur additiven extrusionsbasierten Bauteilherstellung, bestehend aus:
a Volumenprozent sinterbarem Füllmaterial, b Volumenprozent thermoplastischer Zellulose, und c Volumenprozent Additivmaterial, wobei a im Bereich von 20 bis 70 und
b im Bereich von 75 bis 30 liegen und c = (100 - a - b) ist.

## Beschreibung

Die vorliegende Erfindung betrifft ein Material zur additiven extrusionsbasierten Bauteilherstellung, eine Verwendung eines Materials zur additiven extrusionsbasierten Bauteilherstellung, ein additives extrusionsbasiertes Herstellverfahren und eine Zusammensetzung.

Das in der EP 3 167 101 A1 gezeigte Filament soll zur Verwendung in einer 3D-Druckvorrichtung geeignet sein, wobei das Filament ein Metall- und/oder Keramikpulver, ein thermoplastisches Bindemittel und Zusatzstoffe umfasst.

Der noch nicht plastifizierte und bereits abgewickelte Bereich des in der EP 3 167 101 A1 gezeigten Filaments soll als Krafttransmitter wirken, um den plastizierten Bereich zu extrudieren. Die dafür notwendige Manipulation (Fördern, Quetschen, Umlenken) und Krafteinflüsse auf das Filament führen oft zu dessen Bruch im Kaltbereich, während dessen niedrige thermomechanische Stabilität zu einer Erweichung bereits bei Prozess- und Komponentenabwärme führt. Beide Nachteile (leichter Bruch im Kaltbereich und niedrige thermomechanische Stabilität) führen zu einer verminderten und/oder versagenden Kraftübertragung, wobei der kontinuierliche Materialfluss gestört wird.

Dementsprechend gering ist die übertragbare Kraft und einhergehend damit gering die Geschwindigkeit mit der Bauteile auf Basis des in der EP 3 167 101 A1 gezeigten Filaments additiv extrusionsbasiert hergestellt werden können und groß das Risiko von additiv fehlerhaft hergestellten Bauteilen.

Aufgabe der vorliegenden Erfindung ist es, ein Material zur additiven extrusionsbasierten Bauteilherstellung, eine Verwendung eines Materials zur additiven extrusionsbasierten Bauteilherstellung, ein additives extrusionsbasiertes Herstellverfahren und eine Zusammensetzung bereitzustellen, durch die eine kontinuierliche, stabile und zugleich präzise additive extrusionsbasierte Bauteilherstellung ermöglicht werden kann.

Die Aufgabe wird durch den jeweiligen Gegenstand der Ansprüche 1, 10, 11 und 12 gelöst.

Das Material zur additiven extrusionsbasierten Bauteilherstellung besteht aus:
a Volumenprozent sinterbarem Füllmaterial, b Volumenprozent thermoplastischer Zellulose, und c Volumenprozent eines oder mehrerer Additive, wobei a im Bereich von 20 bis 70 und
b im Bereich von 75 bis 30 liegen und c = (100 - a - b) ist.

Das sinterbare Füllmaterial wird durch die thermoplastische Zellulose gebunden, die thermoplastische Zellulose wirkt also als Binder. Das sinterbare Füllmaterial besteht vorzugsweise aus Pulverpartikeln.

Das Material kann als ein durch einen Fördermechanismus förderbares Produkt, zum Beispiel als ein Filament, eine Platte oder ein Stab, oder als ein Ausgangsmaterial für ein solches Produkt, zum Beispiel als Granulat, ausgebildet sein; das Filament ist im Gegensatz zu einem Stab auf eine Rolle wickelbar. Das Granulat kann aber auch in einem und durch einen, beispielsweise mit einem Schneckenextruder als Förder- und Plastifiziereinheit ausgestatteten 3D-Drucker zur additiven extrusionsbasierten Bauteilherstellung verwendet werden.

Mit thermoplastischer Zellulose ist eine Zellulose gemeint, die sich ab dem Eintritt in einen Temperaturbereich, zum Beispiel ab 120°C, im Wesentlichen plastisch und vor dem Eintritt in diesen Temperaturbereich, zum Beispiel bei 20°C, im Wesentlichen elastisch verhält.

Bevorzugte thermoplastische Zellulosen sind: Hydroxypropylzellulose, Hydroxypropylmethylzellulose, Hydroxyethylmethylzellulose und Hydroxyethylzellulose. Die vorliegende Erfindung ist aber nicht auf diese thermoplastischen Zellulosen beschränkt zu verstehen.

Die thermoplastische Zellulose hat die Wirkung, dass sie einem aus dem Material hergestellten Produkt, zum Beispiel dem Filament, der Platte, oder dem Stab, eine hohe Oberflächenhärte und hohe Steifigkeit bei gleichzeitig hoher Duktilität und hoher thermomechanischer Stabilität verleiht.

Das Additivmaterial kann aus einer flüssigen oder festen Additivkomponente oder aus mehreren flüssigen oder festen Additivkomponenten oder aus einer Mischung fester und flüssiger Additivkomponenten bestehen, wobei die Additivkomponente beziehungsweise die mehreren Additivkomponenten jeweils zumindest als Weichmacher, Klebrigmacher, Gleitmittel oder Dispergierstoff ausgebildet sein kann beziehungsweise sein können.

Wenn das Material als das durch einen Fördermechanismus, z.B. durch Rollen oder Zahnräder, förderbares Produkt ausgebildet ist, kann der im Wesentlichen noch nicht plastifizierte und bereits geförderte Bereich, zum Beispiel im Falle des Filaments der abgewickelte Bereich, als Krafttransmitter auf den im Wesentlichen plastizierten Bereich wirken, um diesen zu extrudieren.

Das Material kann aufgrund der thermoplastischen Zellulose stärker und/oder häufiger im im Wesentlichen elastischen Zustand manipuliert werden, zum Beispiel stärker gequetscht und häufiger umgebogen werden, wobei sich das Material unter dem Einfluss von Prozess- und Komponentenabwärme zugleich stabiler verhält.

Das Material lässt sich besser handhaben und fördern und ist zugleich bei Raumtemperatur hinreichend steif und oberflächenhart, um unter einem mechanischen Kontakt zuverlässiger gefördert werden zu können, wenn es als förderbares Produkt ausgebildet ist, zum Beispiel als Stab, Platte oder Filament; analoges gilt, wenn das Material als Granulat ausgebildet ist und aus diesem das förderbare Produkt hergestellt wird. Der an einen im Wesentlichen plastischen Bereich des Materials angrenzende, im Wesentlichen elastische Bereich lässt sich in Richtung einer Förderbewegung besser schieben und ziehen.

Aus dem Material kann ein Grünkörper additiv extrusionsbasiert hergestellt werden. Der Grünkörper kann thermisch entbindert werden, wodurch sich die thermoplastische Zellulose und das Additivmaterial im Wesentlichen entfernen lassen.

Indem das Material aus a Volumenprozent sinterbarem Füllmaterial, b Volumenprozent thermoplastischer Zellulose, und c Volumenprozent des Additivmaterials besteht, wobei a im Bereich von 20 bis 70 und b im Bereich von 75 bis 30 liegen und c = (100 - a - b) ist, gilt insbesondere das Folgende: (a + b + c) = 100, (a + b) ≤ 100, (a + c) ≤ 100, (c + b) ≤ 100, (wenn (a + b) = 100, dann c = 0), (a > b oder a < b oder a = b).

Wenn c = 0, besteht das Material folglich aus dem sinterbaren Füllmaterial und der thermoplastischen Zellulose.

Die thermoplastische Zellulose kann aus einer thermoplastischen Zellulosekomponente, zum Beispiel Hydroxypropylzellulose, oder aus mehreren thermoplastischen Zellulosekomponenten bestehen.

Das sinterbare Füllmaterial kann aus in eine metallische Matrix eingebetteten Hartstoffpartikeln und der metallischen Matrix bestehen, wobei die Hartstoffpartikel den Hauptbestandteil des sinterbaren Füllmaterials bildend sind, mindestens also 60 Gewichtsprozent oder mehr Hartstoffpartikel bezogen auf das sinterbare Füllmaterial, so dass die Hartstoffpartikel beim Sintern eine Skelettstruktur bildend sind, dessen Zwischenräume durch die metallische Matrix füllbar sind.

Das sinterbare Füllmaterial kann alternativ aus Metallpartikeln oder Metalllegierungspartikeln bestehen, wobei das Metall der Metallpartikel beziehungsweise die Metalllegierung der Metalllegierungspartikel den Hauptbestandteil des sinterbaren Füllmaterials bildend ist, mindestens also 60 Gewichtsprozent oder mehr bezogen auf das sinterbare Füllmaterial. Die Metallpartikel oder Metalllegierungspartikel können optional eingebettete Hartstoffpartikel aufweisen, wobei aber das Metall der Metallpartikel beziehungsweise die Metalllegierung der Metalllegierungspartikel weiterhin den Hauptbestandteil des sinterbaren Füllmaterials bildend ist, mindestens also 60 Gewichtsprozent oder mehr des Metalls beziehungsweise der Metalllegierung bezogen auf das sinterbare Füllmaterial.

Das sinterbare Füllmaterial kann alternativ aus Keramikpartikeln bestehen.

Gemäß einer vorteilhaften Weiterbildung ist das Material als Filament ausgebildet, es lässt sich also Aufwickeln und Abwickeln und in dieser Form zumindest abschnittsweise kontinuierlich fördern. Indem das Material als Filament ausgebildet ist, kann es durch Förderrollen besonders gut gefördert und durch Aufwickeln auf eine Spule kompakt gelagert und zur Verfügung gestellt werden (das Filament wird beim Fördern von der Spule abgewickelt), wobei die beschriebenen Vorteile des Materials dabei besonders gut zur Geltung kommen.

Gemäß einer vorteilhaften Weiterbildung des Materials weist das Filament einen Filamentdurchmesser im Bereich von 1 mm bis 5 mm, vorzugsweise von 1,5 mm bis 3 mm, auf. Bei Filamentdurchmessern größer als 5 mm lässt sich das Filament schwerer auf- und abwinkeln.

Gemäß einer vorteilhaften Weiterbildung des Materials ist diesem ein Elastizitätsmodul im Bereich von 200 N/mm² bis 2500 N/mm², vorzugsweise von 300 N/mm² bis 2000 N/mm², bei 23°C zugeordnet, wobei der Elastizitätsmodul als Sekantensteigung bezüglich der technischen Dehnungswerte 0,01 % und 0,05 % eines dem Material zugeordneten Spannungsdehnungsdiagramms zu bestimmen ist.

Das Spannungsdehnungsdiagramm ist nach ÖNORM ISO 527-1 (Ausgabe: 2019-12-01) zu bestimmen. Indem der Elastizitätsmodul als Sekantensteigung im technischen Dehnungsbereich von 0,01 % bis 0,05 % eines dem Material zugeordneten Spannungsdehnungsdiagramms zu bestimmen ist, weicht die Bestimmung des Elastizitätsmoduls insoweit von ÖNORM ISO 527-1 (Ausgabe: 2019-12-01) ab. Die Sekantensteigung ist also mittels Et = (σ₂ - σ₁) / (ε₂ - ε₁) zu berechnen, wobei Eₜ die Sekantensteigung, σ₁ die in Megapascal (MPa) anzugebende Spannung am technischen Dehnungswert ε₁ = 0,0001 (0,01 %) des Spannungsdehnungsdiagramms und σ₂ die in Megapascal (MPa) anzugebende Spannung am technischen Dehnungswert ε₂ = 0,0005 (0,05 %) des Spannungsdehnungsdiagramms ist.

Das Spannungsdehnungsdiagramm ist dem Material zuzuordnen, indem das Material bei einer Verarbeitungstemperatur zwischen 140 und 180 °C in einem Schnecken- oder Kolbenextruder zu fünf Filamentabschnitten mit einem Filamentdurchmesser von 2 mm bis 3 mm und einer Länge von 20 cm bis 30 cm extrudiert und die so extrudierten Filamentabschnitte jeweils in eine Zugprüfmaschine eingespannt und an ihnen jeweils ein Zugversuch nach ÖNORM ISO 527-1 (Ausgabe: 2019-12-01) bei einer konstanten Querhauptgeschwindigkeit von 1 mm/min bis zum Erreichen einer technischen von Dehnung von 2 % durchgeführt wird; so wird das Material auch dann wie beschrieben zu den Filamentabschnitten extrudiert, um das Spannungsdehnungsdiagramm dem Material zuzuordnen, wenn es bereits als Filament ausgebildet ist.

Für die Zugversuche kann jeweils eine Universalprüfmaschine vom Typ Zwick Z010 verwendet werden.

Die maximale Knickkraft, ab deren Überschreiten das Material, wenn es als Filament, Stab oder Platte ausgebildet ist, instabil wird, folgt dem dem Material zugeordneten Elastizitätsmodul im Bereich von 200 N/mm² bis 2500 N/mm², vorzugsweise von 300 N/mm² bis 2000 N/mm², bei 23 °C; wenn das Material als Granulat ausgebildet ist, gilt dieser Zusammenhang zwischen der Knickkraft und dem Elastizitätsmodul analog für ein daraus hergestelltes Produkt, also für das Filament, den Stab und die Platte; also wenn der Elastizitätsmodul betragsmäßig größer wird, wird die maximale Knickkraft größer und umgekehrt.

Gemäß einer vorteilhaften Weiterbildung des Materials ist diesem eine Shore D-Härte im Bereich von 40 bis 95, vorzugsweise im Bereich von 49 bis 90, bei 23°C zugeordnet, wobei die Shore D-Härte an einem aus dem Material additiv extrusionsbasiert hergestellten Härtemessprobekörper zu messen ist.

Die Shore D-Härte ist nach ÖNORM EN ISO 868 (Ausgabe: 2003-09-01) zu messen, womit der Härtemessprobekörper die unter 5.1 und 5.2 der ÖNORM EN ISO 868 (Ausgabe: 2003-09-01) beschriebenen Abmessungsbedingungen erfüllen muss.

Der Härtemessprobekörper ist additiv extrusionsbasiert herzustellen, indem das Material in einen im Wesentlichen plastischen Zustand gebracht und schichtweise aufgetragen wird. Bei der additiv extrusionsbasierten Herstellung des Härtemessprobekörpers wählt der Fachmann die Prozessparameter so, dass der Härtemessprobekörper ausgewogene mechanische Eigenschaften hat.

Indem dem Material die Shore D-Härte von 40 bis 95, vorzugsweise im Bereich von 49 bis 90, bei 23°C zugeordnet ist, setzt das Material, wenn es als Filament, Platte oder Stab ausgebildet ist, dem Einbringen der Krafteinwirkung einer Fördereinrichtung einen optimalen Widerstand entgegen, um im Wesentlichen formstabil durch diese gefördert werden zu können und ausreichend Kraft übertragen zu können, ohne dass z.B. eingreifende Zähne die Oberfläche durchreiben; analoges gilt, wenn das Material als Granulat ausgebildet ist und aus diesem ein Produkt hergestellt ist, zum Beispiel das Filament, die Platte oder der Stab.

Gemäß einer vorteilhaften Weiterbildung des Materials ist das sinterbare Füllmaterial zur Bildung eines gesinterten Hartmetalls (*cemented carbide*), eines gesinterten Cermets, eines gesinterten Metalls, einer gesinterten Metalllegierung oder einer gesinterten Keramik ausgebildet.

Wenn das sinterbare Füllmaterial zur Bildung eines gesinterten Hartmetalls oder eines gesinterten Cermets ausgebildet ist, bildet das sinterbare Füllmaterial beim Sintern einen Verbundwerkstoff, bei dem Hartstoffpartikel, die dann den überwiegenden Bestandteil des Verbundwerkstoffs ausmachen, eine Skelettstruktur bilden, dessen Zwischenräume durch eine demgegenüber duktilere metallische Matrix gefüllt sind. Die Hartstoffpartikel können dabei insbesondere zumindest überwiegend durch Wolframkarbid, Titankarbid und/oder Titankarbonitrid gebildet sein, wobei in geringeren Mengen zusätzlich z.B. auch andere Hartstoffpartikel, insbesondere Karbide der Elemente der Gruppen IV bis VI des Periodensystems, vorhanden sein können. Die metallische Matrix besteht üblicherweise zumindest überwiegend aus Cobalt, Nickel, Eisen oder einer Basislegierung von zumindest einem dieser Elemente. Es können allerdings in geringeren Mengen auch noch andere Elemente in der metallischen Matrix gelöst sein. Unter einer Basislegierung ist dabei zu verstehen, dass dieses Element (das Basiselement) den überwiegenden Bestandteil der Legierung bildet. Am häufigsten kommt Hartmetall zum Einsatz, bei dem die Hartstoffpartikel zumindest überwiegend durch Wolframkarbid gebildet sind und die metallische Matrix eine Cobalt- oder Cobalt-Basislegierung ist; der Gewichtsanteil der entsprechenden Wolframkarbid-Partikel kann dabei insbesondere mindestens 60 Gewichtsprozent, vorzugsweise mindestens 70 Gewichtsprozent, noch mehr bevorzugt mindestens 80 Gewichtsprozent und am meisten bevorzugt mindestens 90 Gewichtsprozent betragen. Skelettstruktur heißt im Sinne der vorliegenden Offenbarung, dass die Hartstoffpartikel, zum Beispiel durch im Wesentlichen Wolframkarbid gebildete Hartstoffpartikel, ein zusammenhängendes Partikelnetzwerk bilden, wo ein beliebiges Hartstoffpartikel mindestens ein anderes Hartstoffpartikel berührt.

Wenn das sinterbare Füllmaterial zur Bildung des gesinterten Metalls oder der gesinterten Metalllegierung ausgebildet ist, werden beim Sintern des sinterbaren Füllmaterials Metallpartikel, zum Beispiel Wolframpartikel oder Molybdänpartikel, beziehungsweise Metalllegierungspartikel, zum Beispiel Stahlpartikel, zusammengesintert, wobei das Metall der Metallpartikel beziehungsweise die Metalllegierung der Metalllegierungspartikel den Hauptbestandteil des sinterbaren Füllmaterials bildend ist, mindestens also 60 Gewichtsprozent oder mehr bezogen auf das sinterbare Füllmaterial. Die Metallpartikel oder Metalllegierungspartikel können optional eingebettete Hartstoffpartikel aufweisen, wobei aber das Metall der Metallpartikel beziehungsweise die Metalllegierung der Metalllegierungspartikel weiterhin den Hauptbestandteil des sinterbaren Füllmaterial bildend ist, mindestens also 60 Gewichtsprozent oder mehr des Metalls beziehungsweise der Metalllegierung bezogen auf das sinterbare Füllmaterial.

Mit dem Metall der Metallpartikel ist gemeint, dass dieses aus einem metallischen Element, zum Beispiel Wolfram oder Molybdän, den optionalen Hartstoffpartikeln und unvermeidbaren Verunreinigungen besteht, zum Beispiel 99 Gewichtsprozent des metallischen Elements und 1 Gewichtsprozent unvermeidbarer Verunreinigungen, mit der Metalllegierung der Metalllegierungspartikel ist gemeint, dass diese aus einer Mischung aus mehreren metallischen Elementen, zum Beispiel Aluminium und Kupfer, oder aus einer Mischung aus mindestens einem metallischen Element, zum Beispiel Eisen, den optionalen Hartstoffpartikeln und einem nichtmetallischen Element, zum Beispiel Kohlenstoff, besteht.

Wenn das sinterbare Füllmaterial zur Bildung einer gesinterten Keramik ausgebildet ist, werden beim Sintern des sinterbaren Füllmaterials Keramikpartikel, zum Beispiel oxidische Keramikpartikel, zum Beispiel Aluminiumoxidpartikel, oder nitridische Keramikpartikel, zum Beispiel Siliziumnitridpartikel, zusammengesintert.

Gemäß einer vorteilhaften Weiterbildung des Materials ist das sinterbare Füllmaterial zur Bildung des gesinterten Cermets oder des gesinterten Hartmetalls ausgebildet, indem das sinterbare Füllmaterial aus in eine metallische Matrix eingebetteten Hartstoffpartikel mit einer mittleren Partikelgröße im Bereich von 0,2 µm bis 50 µm, vorzugsweise von 0,5 µm bis 20 µm, und der metallischen Matrix besteht, wobei das sinterbare Füllmaterial zur Bildung des gesinterten Metalls oder der gesinterten Metalllegierung ausgebildet ist, indem das Füllmaterial aus Metallpartikeln beziehungsweise Metalllegierungspartikeln mit einer mittleren Partikelgröße im Bereich von 0,5 µm bis 100 µm, vorzugsweise von 1 µm bis 40 µm, besteht, wobei das sinterbare Füllmaterial zur Bildung der gesinterten Keramik ausgebildet ist, indem das sinterbare Füllmaterial aus Keramikpartikeln mit einer mittleren Partikelgröße im Bereich von 0,1 µm bis 100 µm, vorzugsweise von 0,5 µm bis 50 µm besteht.

Mit der mittleren Partikelgröße der Metallpartikel, Metalllegierungspartikel und der Keramikpartikel ist jeweils die Partikelgröße gemeint, die einen Durchgangssummenwert von 50 % aufweist, womit also 50 % der gemessenen Partikelgrößen im Kollektiv kleiner und 50 % größer als die mittlere Partikelgröße sind. Der Fachmann wählt ein geeignetes Messverfahren zur Messung der mittleren Partikelgröße, zum Beispiel Sieben für größere Partikel, Laserstreuung mit Partikel mittlerer Größe und Gasabsorptionskurven für kleinere Partikel.

Die mittlere Partikelgröße der Hartstoffpartikel ist im eingebetteten Zustand der Hartstoffpartikel zu messen, wobei die mittlere Partikelgröße der Hartstoffpartikel als "lineare Schnittlänge" gemäß der internationalen Norm ISO 4499-2:2008(E) zu messen ist. Als Messgrundlage dienen EBSD-Bilder von polierten Abschnitten der metallischen Matrix und der darin eingebetteten Hartstoffpartikel. Die Messmethodik an solchen Bildern ist zum Beispiel beschrieben in: K. P. Mingard et al. "Comparison of EBSD and conventional methods of grain size measurement of hard metals", Int. Journal of Refractory Metals & Hard Materials 27 (2009) 213-223.

Gemäß einer vorteilhaften Weiterbildung besteht das sinterbare Füllmaterial aus den in die metallische Matrix eingebetteten Hartstoffpartikeln und der metallischen Matrix, wobei die Hartstoffpartikel als Wolframkarbidpartikel ausgebildet sind, wobei die metallische Matrix aus Cobalt, Nickel oder Eisen und unvermeidbaren Verunreinigungen besteht oder wobei die metallische Matrix aus einer Cobalt-, Nickel-, Eisen-, (Cobalt+Nickel)-, (Cobalt+Eisen)-, (Eisen+Nickel), (Cobalt+Eisen+Nickel)-Basislegierung und unvermeidbaren Verunreinigungen besteht.

Gemäß einer vorteilhaften Weiterbildung des Materials ist das Additivmaterial als Weichmacher, Klebrigmacher, Gleitmittel oder Dispergierstoff ausgebildet.

Die Aufgabe wird auch durch eine Verwendung des Materials nach einem der Ansprüche 1 bis 9 zum additiven extrusionsbasierten Herstellen eines Bauteils gelöst. Es werden die bezüglich des Materials beschriebenen Vorteile analog realisiert.

Die Aufgabe wird auch durch ein additives extrusionsbasiertes Herstellverfahren gelöst, umfassend die Schritte: Bereitstellen des Materials nach einem der Ansprüche 1 bis 9, extrusionsbasiertes additives Herstellen eines Bauteils auf Basis von dem bereitgestellten Material. Das Material wird zum Beispiel als Filament bereitgestellt und durch Erhitzung im Wesentlichen plastifiziert, zum Beispiel durch Erhitzung auf eine Temperatur im Bereich von 190 °C bis 220 °C (denkbar und auch möglich ist aber auch eine Temperatur außerhalb dieses Bereichs), und so plastifiziert auf einen Träger extrudiert.

Die Aufgabe wird auch durch eine Zusammensetzung gelöst, bestehend aus: a Volumenprozent sinterbarem Füllmaterial, b Volumenprozent thermoplastischer Zellulose, und c Volumenprozent Additivmaterial, wobei a im Bereich von 20 bis 70 und b im Bereich von 75 bis 30 liegen und c = (100 - a - b) ist. Dadurch wird eine Zusammensetzung bereitgestellt, durch die die bezüglich des Materials beschriebenen Vorteile realisiert werden und auf dessen Basis das Material herstellbar ist.

### AUSFÜHRUNGSBEISPIELE

Weitere Vorteile und Zweckmäßigkeiten der Erfindung ergeben sich anhand der nachfolgenden Beschreibung von Ausführungsbeispielen.

### Filament A

Aus erfindungsgemäßem Material wurde ein Filament A mit einem Filamentdurchmesser von 1,78 mm hergestellt.

Das Filament A besteht aus a = 49,3 Volumenprozent sinterbarem Füllmaterial in Form von (Cobalt und Wolframkarbid), b = 44,9 Volumenprozent thermoplastische Zellulose in Form von Hydroxypropylzellulose und c = 5,8 Volumenprozent Additivmaterial in Form von (Polyethylenglycol 4000 und Stearinsäure). Die Hydroxypropylzellulose bindet das sinterbare Füllmaterial.

Das sinterbare Füllmaterial (Cobalt und Wolframkarbid) des Filaments A ist pulverförmig und besteht aus 8,2 Gewichtsprozent Cobalt in Partikelform und 91,8 Gewichtsprozent Wolframkarbid in Partikelform, jeweils auf das sinterbare Füllmaterial bezogen. Die Wolframkarbid-Partikel sind dabei in die Cobalt-Partikel, welche größer sind als die WolframKarbidpartikel, eingebettet; das Cobalt bildet also eine metallische Matrix bezüglich der Wolframkarbid-Hartstoffpartikel.

Die Wolframkarbid-Partikel des Filaments A weisen eine mittlere Partikelgröße im Bereich von 0,5 µm bis 0,8 µm auf; dieser Bereich wird üblicherweise als "ultrafine" bezeichnet.

Das Additivmaterial des Filaments A besteht aus 31 Volumenprozent Polyethylenglycol 4000 und 69 Volumenprozent Stearinsäure, jeweils auf das Additivmaterial bezogen.

Dem Filament A ist ein Elastizitätsmodul von 1710 N/mm² bei 23 °C zugeordnet, wobei der Elastizitätsmodul als Sekantensteigung bezüglich der technischen Dehnungswerte 0,01 % und 0,05 % eines dem Filament A zugeordneten Spannungsdehnungsdiagramms bestimmt ist; einem weiteren Filament A*, analog zu dem Filament A, aber mit einem Filamentdurchmesser von 2,89 mm, wurde analog ein Elastizitätsmodul von 1820 N/mm² bei 23 °C zugeordnet.

Das Spannungsdehnungsdiagramm wurde nach ÖNORM ISO 527-1 (Ausgabe: 2019-12-01) den Filamenten A und A*zugeordnet, indem das Filament A beziehungsweis das Filament A* zerkleinert und bei einer Verarbeitungstemperatur zwischen 140 °C und 180 °C in einem Schnecken- oder Kolbenextruder zu fünf Filamentabschnitten mit einem Filamentdurchmesser von 1, 5 mm bis 3 mm und einer Länge von 20 cm bis 30 cm extrudiert und die so extrudierten Filamentabschnitte jeweils in eine Zugprüfmaschine (Typ Zwick Z010) eingespannt und an ihnen jeweils ein Zugversuch nach ÖNORM ISO 527-1 (Ausgabe: 2019-12-01) bei einer konstanten Querhauptgeschwindigkeit von 1 mm/min bis zum Erreichen einer technischen von Dehnung von 2 % durchgeführt wurde.

Die Sekantensteigung wurde mittels Et = (σ₂ - σ₁) / (ε₂ - ε₁) berechnet, wobei Et die Sekantensteigung, σ₁ die in Megapascal (MPa) anzugebende Spannung am technischen Dehnungswert ε₁ = 0,0001 (0,01 %) des Spannungsdehnungsdiagramms und σ₂ die in Megapascal (MPa) anzugebende Spannung am technischen Dehnungswert ε₂ = 0,0005 (0,05 %) des Spannungsdehnungsdiagramms ist.

Versuche mit einem 3D-Drucker haben gezeigt, dass das Filament A und Filament A* gegenüber einem Abknicken unter Stauchung optimal stabilisiert sind, so dass ein im Wesentlichen elastischer Bereich (Kaltbereich) des Filaments A respektive Filament A* auf seinen im Wesentlichen plastischen Bereich ausreichend Kraft bei Abwickeln von der Spule überträgt, um den plastischen Bereich aus einer Düse zu drücken.

So hat eine direkte Messung der Knickkraft des Filaments A und des Filaments A* in einer Zugprüfmaschine des Typs Zwick Z010 bei einer Prüfgeschwindigkeit von 5 mm/min und einer Einspannlänge von 100 mm des Filaments A beziehungsweise A* ergeben, dass sich der als Sekantensteigung bestimmte Elastizitätsmodul proportional zur Knickkraft des Filaments A beziehungsweise A* verhält, genauer, F_{Knick} = ((4^{∗}π²)/L²) Eₜ^{∗}I), wobei F_{Knick} die theoretische Knickkraft, L die Einspannlänge und I das Flächenträgheitsmoment des Filaments A ist; I = (π/4)^{∗}(d/2)⁴, wobei d der Filamentdurchmesser des Filaments A beziehungsweise A* ist.

Die Berechnung des Elastizitätsmoduls aus der gemessenen Knickkraft beziehungsweise die Berechnung der Knickkraft aus dem gemessenen Elastizitätsmoduls Et hat eine sehr gute Übereinstimmung zwischen gemessenen und berechneten Werten ergeben. Das Filament A und das Filament A* verhalten sich annähernd linear, jeweils unter Zug und Stauchung und bei Dehnungswerten im Bereich von 0,01 % bis 0,05 % beziehungsweise von -0,01 % bis -0,05 %. Somit korreliert die Knickkraft mit dem Elastizitätsmodul. Je höher der Elastizitätsmodul, desto höher auch die Knickkraft, was wiederum vorteilhaft für die Anwendung im 3D-Druck ist; der Zusammenhang wurde durch weitere Versuche an aus erfindungsgemäßem Material hergestellten Filamenten bestätigt.

Das Filament A und das Filament A* wurden bei 20 °C Raumtemperatur abschnittsweise auf eine Spule mit dem Durchmesser 90 mm 10-mal händisch auf- und abgewickelt, ohne dass es zu einem Bruch des Filaments A beziehungsweise A* kam; analoge Filamente ohne thermoplastische Zellulose brechen leichter oder erweichen bereits bei geringeren Temperaturen oder weisen eine geringere Härte auf.

Dem Filament A ist eine Shore D-Härte von 77 bei 23 °C zugeordnet, wobei die Shore D-Härte an einem aus dem Filament A additiv extrusionsbasiert hergestellten Härtemessprobekörper gemessen wurde. Der Härtemessprobekörper wurde additiv extrusionsbasiert hergestellt, indem das Filament A in einen im Wesentlichen plastischen Zustand gebracht und schichtweise zu einem Quader mit den Abmessungen 20x50x4 mm aufgetragen wird. Die Prozessparameter wurden bei der Herstellung des Härtemessprobekörpers so gewählt, dass dieser ausgewogene mechanische Eigenschaften aufweist.

Die Shore D-Härte ist nach ÖNORM EN ISO 868 (Ausgabe: 2003-09-01) zu messen, womit der Härtemessprobekörper die unter 5.1 und 5.2 der ÖNORM EN ISO 868 (Ausgabe: 2003-09-01) beschriebenen Abmessungsbedingungen erfüllt.

Es hat sich gezeigt, dass das Filament A durch die Shore D-Härte von 77 bei 23 °C besser gegen ein Durchreiben in einer Fördereinrichtung geschützt ist.

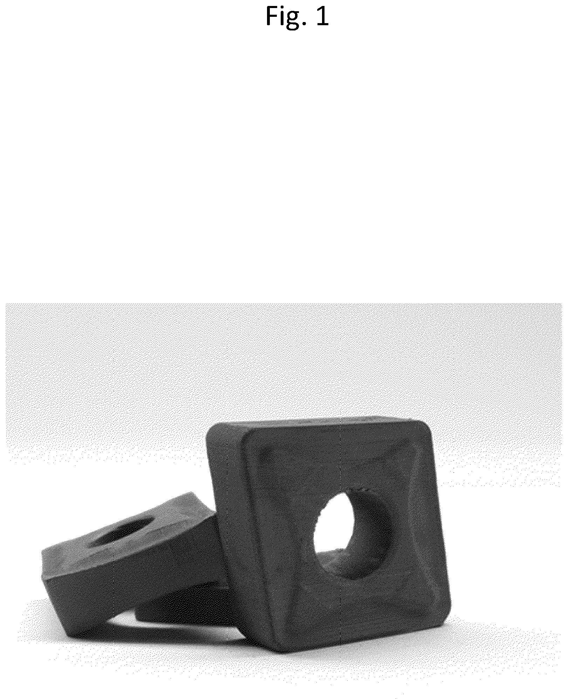

Aus dem Filament A wurden die in Fig. 1 gezeigten Wendeschneidplatten-Grünkörper additiv extrusionsbasiert hergestellt.

### Filament B

Aus erfindungsgemäßem Material wurde ein Filament B mit einem Filamentdurchmesser von 1,78 mm hergestellt.

Das Filament B besteht aus a = 60,0 Volumenprozent sinterbarem Füllmaterial in Form von (Edelstahl der Stahlsorte 1.4548 gemäß DIN EN 10088:2014-12, "X5CrNiCuNb"), b = 34,0 Volumenprozent thermoplastische Zellulose in Form von Hydroxypropylzellulose und c = 6,0 Volumenprozent Additivmaterial in Form von (Polyethylenglycol 4000 und Stearinsäure). Die Hydroxypropylzellulose bindet das sinterbare Füllmaterial analog zum Filament A.

Das sinterbare Füllmaterial (Edelstahl der Stahlsorte 1.4548 gemäß DIN EN 10088:2014-12, "X5CrNiCuNb") des Filaments B ist pulverförmig, es handelt sich also um Edelstahlpulver der Stahlsorte 1.4548 gemäß DIN EN 10088:2014-12 ("X5CrNiCuNb).

Die Edelstahl-Partikel des Filaments B weisen eine mittlere Partikelgröße von 7,11 µm auf. Die mittlere Partikelgröße der Edelstahl-Partikel des Filaments B wurde durch Laserstreuung bestimmt.

Das Additivmaterial (Polyethylenglycol 4000 und Stearinsäure) des Filaments B besteht aus 23 Volumenprozent Polyethylenglycol 4000 und 77 Volumenprozent Stearinsäure, jeweils auf das Additivmaterial.

Dem Filament B ist ein Elastizitätsmodul von 1300 N/mm² bei 23°C zugeordnet, wobei der Elastizitätsmodul als Sekantensteigung bezüglich der technischen Dehnungswerte 0,01 % und 0,05 % eines dem Filament B zugeordneten Spannungsdehnungsdiagramms bestimmt ist; der Elastizitätsmodul des Filaments B wird dem Elastizitätsmodul des Filaments A analog bestimmt, das Filament B wurde also für die Bestimmung des E-Moduls zerkleinert und extrudiert.

Das Filament B wurde dem Filament A analog abschnittsweise auf eine Spule mit dem Durchmesser 90 mm 10-mal händisch auf- und abgewickelt, ohne dass es zu einem Bruch des Filaments B kam.

Dem Filament B ist eine Shore D-Härte von 68 bei 23°C zugeordnet, wobei die Shore D-Härte an einem aus dem Filament B additiv extrusionsbasiert hergestellten Härtemessprobekörper gemessen wurde; der Härtemessprobekörper wurde analog zu dem des Filaments A hergestellt.

### Weitere Filamente

Es wurden weitere Filamente analog zu den Filamenten A und B hergestellt, wobei jeweils der Volumenanteil des sinterbaren Füllmaterials und der der thermoplastischen Zellulose in den Bereichen a von 20 bis 70 und b von 75 bis 30 variiert wurden, wobei der Volumenanteil des Additivmaterial c = (100 - a - b) jeweils erfüllte. Ferner wurde der Filamentdurchmesser der weiteren Filamente im Bereich von 1 mm bis 5 mm variiert.

### Noch weitere Filamente

Noch weitere Filamente wurden aus erfindungsgemäßem Material analog zu dem Filament A hergestellt, wobei das sinterbare Füllmaterial des Filaments A durch eine Keramik (Aluminiumoxid) in Pulverform ersetzt wurde.

Auch diese noch weiteren Filamente ließen sich jeweils mindestens 10-mal von einer Spule bruchfrei auf- und abwinkeln, zeigten eine optimale Kraftübertragung des jeweils im Wesentlichen plastischen Bereichs auf den im Wesentlichen plastischen Bereich beim Abwinkeln von der Spule und einen optimalen Rollenwiderstand.

Außerdem wurden Filamente aus erfindungsgemäßem Material hergestellt, wobei eine Variation des Additivmaterials in Art und Anteil andere vorteilhafte Eigenschaften des erfindungsgemäßen Materials hinsichtlich Verarbeitung mittels additiver Fertigung hervorbrachten, beispielsweise verbesserte Lagenhaftung, reduzierte Druckbetthaftung, reduzierte Viskosität in der Schmelze, etc.

## Patentansprüche

1. Material zur additiven extrusionsbasierten Bauteilherstellung, bestehend aus:
a Volumenprozent sinterbarem Füllmaterial, b Volumenprozent thermoplastischer Zellulose, und c Volumenprozent Additivmaterial, wobei a im Bereich von 20 bis 70 und b im Bereich von 75 bis 30 liegen und c = (100 - a - b) ist.

2. Material nach Anspruch 1, wobei das Material als Filament ausgebildet ist.

3. Material nach Anspruch 2, wobei das Filament einen Filamentdurchmesser im Bereich von 1 mm bis 5 mm aufweist.

4. Material nach einem der vorhergehenden Ansprüche, wobei dem Material ein Elastizitätsmodul im Bereich von 200 N/mm² bis 2500 N/mm² bei 23 °C zugeordnet ist, wobei der Elastizitätsmodul als Sekantensteigung bezüglich der technischen Dehnungswerte 0,01 % und 0,05 % eines dem Material zugeordneten Spannungsdehnungsdiagramms zu bestimmen ist.

5. Material nach einem der vorhergehenden Ansprüche, wobei dem Material eine Shore D-Härte im Bereich von 40 bis 95, vorzugsweise im Bereich von 49 bis 90, bei 23 °C zugeordnet ist, wobei die Shore D-Härte an einem aus dem Material additiv extrusionsbasiert hergestellten Härtemessprobekörper zu messen ist.

6. Material nach einem der vorhergehenden Ansprüche, wobei das sinterbare Füllmaterial zur Bildung eines gesinterten Hartmetalls (*cemented carbide*), eines gesinterten Cermets, eines gesinterten Metalls, einer gesinterten Metalllegierung oder einer gesinterten Keramik ausgebildet ist.

7. Material nach Anspruch 6, wobei das sinterbare Füllmaterial zur Bildung des gesinterten Cermets oder des gesinterten Hartmetalls ausgebildet ist, indem das sinterbare Füllmaterial aus in eine metallische Matrix eingebetteten Hartstoffpartikel mit einer mittleren Partikelgröße im Bereich von 0,2 µm bis 50 µm, vorzugsweise von 0,5 µm bis 20 µm, und der metallischen Matrix besteht, wobei das sinterbare Füllmaterial zur Bildung des gesinterten Metalls oder der gesinterten Metalllegierung ausgebildet ist, indem das Füllmaterial aus Metallpartikeln beziehungsweise Metalllegierungspartikeln mit einer mittleren Partikelgröße im Bereich von 0,5 µm bis 100 µm, vorzugsweise von 1 µm bis 40 µm, besteht, wobei das sinterbare Füllmaterial zur Bildung der gesinterten Keramik ausgebildet ist, indem das sinterbare Füllmaterial aus Keramikpartikeln mit einer mittleren Partikelgröße im Bereich von 0,1 µm bis 100 µm, vorzugsweise von 0,5 µm bis 50 µm besteht.

8. Material nach Anspruch 7, wobei das sinterbare Füllmaterial aus den in die metallische Matrix eingebetteten Hartstoffpartikeln und der metallischen Matrix besteht, wobei die Hartstoffpartikel als Wolframkarbidpartikel ausgebildet sind, wobei die metallische Matrix aus Cobalt, Nickel oder Eisen und unvermeidbaren Verunreinigungen besteht oder wobei die metallische Matrix aus einer Cobalt-, Nickel-, Eisen-, (Cobalt+Nickel)-, (Cobalt+Eisen)-, (Eisen+Nickel), (Cobalt+Eisen+Nickel)-Basislegierung und unvermeidbaren Verunreinigungen besteht.

9. Material nach einem der vorhergehenden Ansprüche, wobei das Additivmaterial als Weichmacher, Klebrigmacher, Gleitmittel oder Dispergierstoff ausgebildet ist.

10. Verwendung des Materials nach einem der Ansprüche 1 bis 9 zur additiven extrusionsbasierten Herstellung eines Bauteils.

11. Additives extrusionsbasiertes Herstellverfahren, umfassend die Schritte: Bereitstellen des Materials nach einem der Ansprüche 1 bis 9, additives extrusionsbasiertes Herstellen eines Bauteils auf Basis von dem bereitgestellten Material.

12. Zusammensetzung, bestehend aus: a Volumenprozent sinterbarem Füllmaterial, b Volumenprozent thermoplastischer Zellulose, und c Volumenprozent Additivmaterial, wobei a im Bereich von 20 bis 70 und b im Bereich von 75 bis 30 liegen und c = (100 - a - b) ist.
